Europäisches Patentamt

European Patent Office

Office européen des brevets

(19)

(11) Veröffentlichungsnummer: **0 148 160**
A2

(12) **EUROPÄISCHE PATENTANMELDUNG**

(21) Anmeldenummer: **85100673.4**

(22) Anmeldetag: **27.03.82**

(51) Int. Cl.⁴: **B 43 L 13/02**
G 06 K 15/22, G 05 B 19/41

(30) Priorität: **30.03.81 DE 3112551**

(43) Veröffentlichungstag der Anmeldung:
**10.07.85 Patentblatt 85/28**

(84) Benannte Vertragsstaaten:
**AT BE CH DE FR GB IT LI LU NL SE**

(60) Veröffentlichungsnummer der früheren
Anmeldung nach Art. 76 EPÜ: **0 061 755**

(71) Anmelder: **BZ Plankenhorn KG**
**Mühlgasse 22**
**D-7208 Spaichingen(DE)**

(72) Erfinder: **Däuble, Herbert**
**Haupstrasse 132**
**D-7208 Spaichingen(DE)**

(74) Vertreter: **Neugebauer, Erich, Dr.**
**Postfach 260101 Zweibrückenstrasse 10**
**D-8000 München 26(DE)**

(54) **Verfahren zum Anfertigen von Zeichnungen und Zeichenmaschine zum Durchführen des Verfahrens.**

(57) Verfahren zum Anfertigen von Zeichnungen und rechnergesteuerte Laufwagen-Zeichenmaschine (10) zum Durchführen des Verfahrens, wobei die Daten zu zeichnender Linien oder Symbole über eine Tastatur (14) in einen Rechner (12) eingegeben oder aus einem Rechner (12) abger·rfen werden und der Zeichenkopf (26) mittels den Laufwagen zugeordneten, aufgrund der eingegebenen bzw. abgerufenen Daten gesteuerter Einrichtungen der Servoelektronik nur für Bewegungen längs des Weges der Linien oder Symbole freigegeben wird, die den eingegebenen bzw. abgerufenen Daten entsprechen, und die Linien oder Symbole durch manuelles Bewegen des Zeichenkopfes (26) längs der durch die Einrichtungen der Servoelektronik gegebenen Führung gezeichnet werden.

EP 0 148 160 A2

./...

Croydon Printing Company Ltd

Fig. 1

POSTADRESSE
DR. E. NEUGEBAUER
POSTFACH 260 101
D-8000 MÜNCHEN 26

DR. ERICH NEUGEBAUER
PATENTANWALT
EUROPEAN PATENT ATTORNEY
ZUGELASSEN BEIM EUROPÄISCHEN PATENTAMT

MORASSISTRASSE 2

0148160

- 1 -

23. Januar 1985

BZ Plankenhorn KG
80A-4247


Verfahren zum Anfertigen von Zeichnungen und

Zeichenmaschine zum Durchführen des Verfahrens

(Ausscheidungsanmeldung aus 82102608.5)


Die vorliegende Erfindung betrifft ein Verfahren zum Anfertigen von Zeichnungen mittels einer rechnergesteuerten Laufwagen-Zeichenmaschine mit einem Zeichenkopf, Positionserfassungseinrichtungen für das Erfassen der jeweiligen Koordinaten des Zeichenkopfes und einem mit den Positionserfassungseinrichtungen verbundenen Rechner mit Speichereinrichtungen und Tastatur sowie eine Zeichenmaschine zum Durchführen des Verfahrens.

Es sind bereits digital anzeigende Laufwagen-Zeichenmaschinen bekannt, bei denen über die Laufwagen eine digitale Koordinatenanzeige und außerdem am Zeichenkopf eine digitale Winkelanzeige erhalten wird. Die digitale X- und Y-Koordinatenanzeige erfolgt dabei bezogen auf die Drehachse des Zeichenkopfes unter Berücksichtigung des Nullpunkts der Zeichenlineale. Der Vorteil solcher digital anzeigender Laufwagen-Zeichenmaschinen besteht dabei darin, daß

TELEFON
(089) 22 43 37 UND
(089) 29 25 61

TELEX 5-244 77 pat-d
TELEGRAMMADRESSE (CABLES):
BAVARIAPATENT MÜNCHEN

POSTSCHECKKONTO:
POSTSCHECKAMT MÜNCHEN
55 19-803 (BLZ 700 100 80)

BANKVERBINDUNG:
BAYER. VEREINSBANK MÜNCHEN
KONTO 565 500 (BLZ 700 202 70)

bei Eingabe entsprechender Steuerbefehle an einer hierfür vorgesehenen Tastatur auch die Anzeige der Abstände
von Punkten voneinander und von einem gemeinsamen Nullpunkt ermöglicht wird, wobei durch Umschaltung auf Polarkoordinaten neben den X- und Y-Abständen auch die Winkel
und Radien bestimmt bzw. angezeigt werden können. Diese
Möglichkeiten erleichtern insbesondere in Verbindung mit
der Möglichkeit, auch bestimmte Zeichnungsmaßstäbe auszuwählen, die Arbeit des Konstrukteurs hinsichtlich der Genauigkeit, mit der die Zeichnungen erstellt werden können
und hinsichtlich der Vermeidung von Rechenfehlern. Andererseits ändert sich an der Zeichentätigkeit des Konstrukteurs
beim Arbeiten mit einer digital anzeigenden Laufwagen-Zeichenmaschine insofern nichts Wesentliches, als die einzelnen Linien der Zeichnung an den Zeichenlinealen in üblicher
Weise unter Fixierung des Zeichenkopfes gezeichnet werden
müssen und da die Anzeige der Laufwagen-Zeichenmaschine für
zahlreiche Zeichenarbeiten, wie das Einzeichnen von Kreisen
oder das Einzeichnen von gekrümmten Linien mit Hilfe von
Kurvenlinealen, nur wenig zusätzliche Hilfe bietet.

Es sind auch bereits rechnergesteuerte Laufwagen-Zeichenmaschinen bekannt, die ein automatisches Zeichnen von
geraden oder gekrümmten Linien von Kurven, Teilfiguren,
Symbolen oder ganzen Zeichnungen ermöglichen, wobei die
Daten der zu zeichnenden Linien, Teilfiguren oder Zeichnungen bzw. Symbole in den Rechner eingegeben oder als im Rechner gespeicherte Programme abgerufen werden können.
Derartige rechnergesteuerte Laufwagen-Zeichenmaschinen
haben jedoch den Nachteil, daß der Konstrukteur bei der
Erstellung von Konstruktionszeichnungen mittels derartiger
Laufwagen-Zeichenmaschinen seine gewohnte Arbeitsweise
am Zeichenbrett aufgeben und sich ausschließlich
auf die Bedienung der rechnergsteuerten Laufwagen-Zeichenmaschine umstellen muß.

Aufgabe der vorliegenden Erfindung ist die Schaffung eines
Verfahrens zum Anfertigen von Zeichnungen und einer rechnergesteuerten Laufwagen-Zeichenmaschine zum Durchführen
des Verfahrens, die es dem Konstrukteur ermöglichen, Zeichenarbeiten weiterhin von Hand durchzuführen, wobei jedoch die Notwendigkeit für die Verwendung von Zirkeln,
Schablonen, Kurvenlinealen usw. entfällt.

Diese Aufgabe wird ausgehend von dem eingangs genannten
Verfahren bei dem erfindungsgemäßen Verfahren dadurch gelöst, daß die Daten zu zeichnender Linien oder Symbole
über die Tastatur in den Rechner eingegeben oder aus dem
Rechner abgerufen werden und der Zeichenkopf mittels den
Laufwagen zugeordneten, aufgrund der eingegebenen bzw. abgerufenen Daten gesteuerter Einrichtungen der Servoelektronik nur für Bewegungen längs des Weges der Linien oder
Symbole freigegeben wird, die den eingegebenen bzw. abgerufenen Daten entsprechen, und daß die Linien oder Symbole

- 4 -

0148160

dann durch manuelles Bewegen des Zeichenkopfes längs der durch die Einrichtungen der Servoelektronik gegebenen Führung gezeichnet werden. Das erfindungsgemäße Verfahren bietet den Vorteil,daß der Konstrukteur weiterhin am Zeichenbrett mindestens Teile der Zeichnung von Hand zeichnen kann, wobei die erfindungsgemäße elektronische Führung des Zeichenkopfes das Anfertigen der Zeichnungen wesentlich erleichtert. Vorteilhafte Weiterbildungen der Erfindung und die Merkmale der rechnergesteuerten Laufwagen-Zeichenmaschine zum Durchführen des erfindungsgemäßen Verfahrens sind in den Unteransprüchen gekennzeichnet. Besondere Vorteile werden erreicht, wenn eine rechnergesteuerte Zeichenmaschine vorgesehen ist, bei der die Möglichkeit besteht, die verschiedenen Daten über die Ansetzpunkte eines Plotters und über die an diesen Ansetzpunkten jeweils zu zeichnenden Symbole, Teilfiguren usw. beim Zeichnen mit der Zeichenmaschine in den Speicher des Rechners einzugeben.

Im folgenden wird die Erfindung anhand schematischer Zeichnungen an Ausführungsbeispielen näher erläutert. Es zeigen:

Fig. 1 eine erste Ausführungsform und

Fig. 2 eine abgewandelte Ausführungsform.

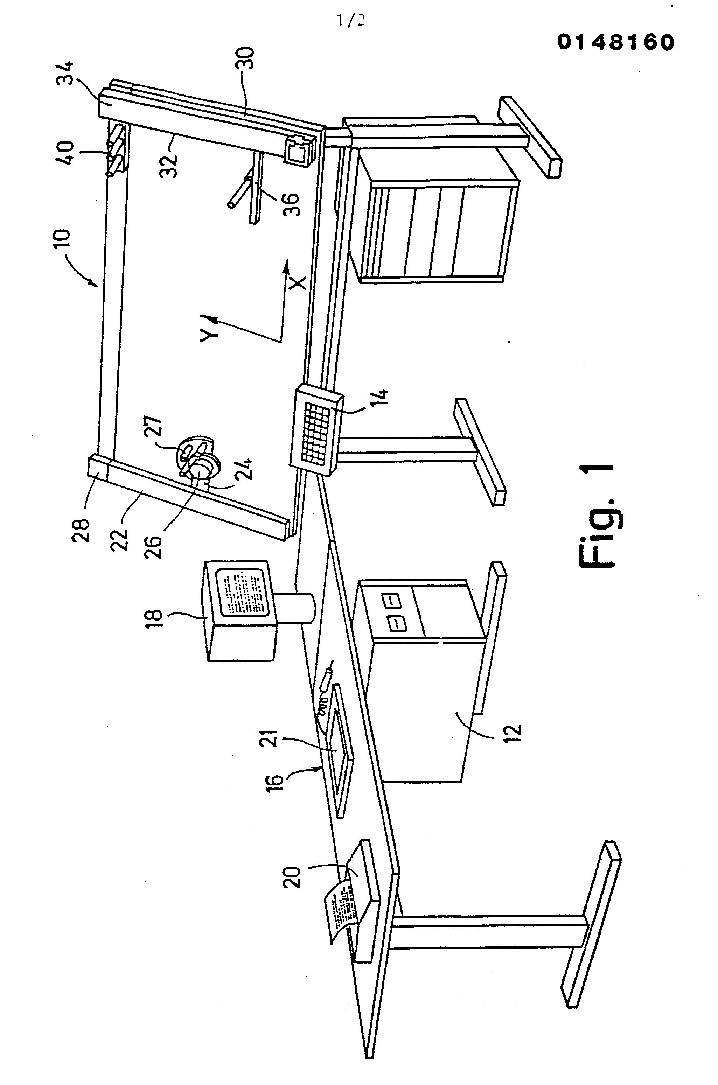

Fig. 1 zeigt einen Arbeitsplatz gemäß der Erfindung, wobei als Basiselemente eine rechnergesteuerte Lauf-

- 5 -                                    0148160

wagen-Zeichenmaschine 10 mit einem zugehörigen Rechner
12, beispielsweise einem Mikrocomputer mit Diskettenlaufwerken, sowie ein Plotter 32 vorgesehen sind.
Außerdem ist an der Zeichenmaschine 10 eine in horizontaler Richtung bzw. in X-Richtung verfahrbare Tastatur
14 vorgesehen, die über entsprechende Leitungen (nicht
dargestellt) mit der Zeichenmaschine 10 und dem Rechner
12 verbunden ist. Weiterhin ist im rechten Winkel zur
Zeichenmaschine 10 noch ein Arbeitstisch 16 vorgesehen,
auf dem sich mit dem Rechner 12 verbundene Peripheriegeräte befinden, nämlich ein schwenkbarer Datenmonitor
18, eine Drucker/Schreibmaschinen-Anordnung 20 und ein
Graphic-Tablett 21.

Erfindungsgemäß ist bei der Zeichenmaschine 10 am rechten Rand des Zeichenbretts ein Plotter 32 mit Schreibstiftmagazin 40 vorgesehen, der mit einem zusätzlichen
Laufwagen der Zeichenmaschine 10 verbunden ist und dessen Rahmen   34 in X-Richtung des Zeichenbretts 30 verfahrbar ist. Mit dem Plotter 32 ist es nun möglich, nach
der Erstellung einer Zeichnung mit den Zeichenstiften 27
aufgrund der gespeicherten Zusatzdaten die endgültige
Fertigstellung der Zeichnung vorzunehmen, wobei die
Plotter-Positionierung aufgrund seiner Verbindung mit
der Laufschiene des Zeichenbretts keinerlei Probleme
mehr mit sich bringt, so daß die Ergänzung der Zeichnung
wegen der geringen Trägheit der Schreibstifthalterung 36
mit der für Plotter typischen hohen Arbeitsgeschwindigkeit vorgenommen werden kann.

Rein äußerlich fällt an der Zeichenmaschine 10 zunächst
einmal auf, daß die in X-Richtung verfahrbare, in ihrer
äußersten linken Stellung gezeigte Halterung 22 mit dem
Zeichenkopfträger 24 nicht mit den üblichen Zeichen-
Hilfseinrichtungen, d.h. mit einem drehbaren Zeichenkopf und daran befestigten Linealen versehen ist, sondern                  .      mit einem Schreib/Lesestift-
Träger 26, der im Prinzip als einfache Halterung für
einen Schreib- bzw. Zeichenstift sowie einen Lesestift
ausgebildet sein kann, der aber beim Ausführungsbeispiel

als Revolverkopf mit mehreren - in Fig. 1 drei - Stiften 27
ausgestaltet ist und nachstehend daher der Einfachheit
halber als Stiftrevolver 26 bezeichnet wird. Schließlich befindet sich am oberen Ende der Halterung 22 noch
das Gehäuse 28, welches Bestandteil der X-Y-Führung
ist und die erforderliche Servoelektronik mit mindestens
einem Positioniermotor und Einrichtungen zur Wegmessung
enthält.

Bei dem in Fig. 1 gezeigten Arbeitsplatz besteht dann,
wenn man den Stiftrevolver 26 gegen einen normalen Zeichenkopf mit Linealen auswechselt, zunächst einmal die
Möglichkeit, "ganz normal" zu zeichnen, wobei es für
die Arbeit des Zeichners ohne besonderes Interesse ist,
daß die Laufwagen-Zeichenmaschine 10 des betrachteten
Zeichengeräts nicht mehr mit dem konventionellen
Gewichtsausgleich arbeitet, sondern stattdessen elektronische Gewichts- und Reibungsausgleichseinrichtungen
aufweist, und zwar im Gehäuse 28, die ebenfalls eine
leichte Beweglichkeit des Zeichenkopfes ermöglichen und auch bei aufgestelltem Zeichenbrett 30 - dies entspricht der in Fig. 1 gezeichneten Situation - dafür sorgen, daß der Zeichenkopf in der Lage bleibt, in die er von Hand bewegt wurde. Andererseits eröffnen der Rechner 12 und der Datenmonitor 18 auch bei diesem normalen Zeichenbetrieb die bei neueren Zeichenmaschinen bereits verwirklichte Möglichkeit der Anzeige der X-Koordinaten, der Y-Koordinaten und gegebenenfalls der Winkelstellung des Zeichenkopfs.

Wenn anstelle der normalen Zeicheneinrichtungen mit dem Zeichenkopfträger 24 der Stiftrevolver 26 verbunden ist, dann besteht jedoch                anders als bei den bisher üblichen Zeichengeräten auf der Basis von Laufwagen-Zeichenmaschinen die Möglichkeit, durch Verfahren des Stiftrevolvers 26 gegenüber dem Zeichenbrett 30 direkt mit dem jeweils in der Zeichenposition befindlichen Zeichenstift 27 zu zeichnen. Ferner kann nunmehr über die zwischen der Zeichenmaschine 10 und dem Rechner 12 bestehenden Leitungsverbindungen eine unmittelbare Speicherung der Koordinatendaten für die mit dem Zeichenstift 27 gezeichnete Linie erfolgen. Auf diese Weise werden zunächst einmal die Daten gesammelt, die später bei einer automatischen Steuerung des Zeichenstiftes 27 durch den Rechner 12 eine genaue Rekonstruktion einer früher erstellten Zeichnung gestatten, wobei gegebenenfalls erforderliche Ergänzungen und Korrekturen Berücksichtigung finden können. Bei diesem "freien Zeichnen" mit dem jeweils ausgewählten, vom Stiftrevolver 26 getragenen Zeichenstift 27 arbeitet der elektronische Gewichtsausgleich so, daß die vom Zeichner eingeleiteten Bewegungen des Stiftrevolvers durch die Servoelektronik unterstützt werden, so daß sich der Stiftrevolver ebenso frei bewegen läßt wie der Zeichenkopf einer normalen Zeichenmaschine.

Ferner kann man beim Zeichnen mit dem Zeichenstift 27 einer fest vorgegebenen Linie folgen. Bei dieser Arbeitsweise werden die Daten für die betreffende Linie, beispielsweise in Form der Koordinaten der Endpunkte einer geraden Linie oder in Form der Daten über Mittelpunkt und Radius eines zu zeichnenden Kreises, zuvor an der Tastatur 14 eingetastet, wobei die Möglichkeit besteht, über die Eingaben an der Tastatur 14 auch zugeordnete Unterprogramme aus dem Rechner 12 abzurufen. Aufgrund der damit vorgegebenen Daten werden die Einrichtungen der Servoelektronik dann so angesteuert, daß sich für das Verfahren des Stiftrevolvers 26 praktisch eine elektronische Kulissenführung ergibt, die das Zeichnen einer bestimmten, fest vorgegebenen Linie erzwingt.

Während des Verfahrens des Stiftrevolvers 26 längs der durch die elektronische Kulissenführung vorgegebenen Linie hat der Zeichner dann Gelegenheit, beim Erreichen bestimmter Punkte der Linie über die Tastatur 14 zusätzliche Daten in den Rechner 12 einzugeben, welche beispielsweise Hilfspunkte für die Vermaßung, Punkte für die Anbringung von Bezugszeichen, Punkte für die Ergänzung der Zeichnung mit vorgegebenen Teilfiguren,

Punkte für die Anbringung von Bearbeitungszeichen usw. betreffen können.

Ein besonderer Vorteil des             Zeichengeräts besteht ferner darin, daß dieses auch im "Kopierbetrieb" arbeiten kann. In diesem Fall wird auf das Zeichenbrett 30 eine vorbereitete Zeichnung aufgespannt, deren einzelne Linien dann mit einem vom Stiftrevolver getragenen Lesestift abgetastet werden, wobei dieser "Lesestift", der beispielsweise ein einfacher, nicht schreibender Stahlstift mit abgerundeter Spitze sein kann, an den interessierenden Zeichnungslinien entlanggeführt wird, um deren Koordinatendaten in den Speicherteil des Rechners 12 zu übernehmen, wobei Zitterbewegungen bzw. Ungenauigkeiten bei der Linienabtastung mit frei, von Hand geführtem Stiftrevolver 26 durch entsprechende elektronische Korrekturschaltungen des Rechners korrigiert werden können, wobei aber auch die Möglichkeit in Betracht zu ziehen ist, den Stiftrevolver mit den beispielsweise bei Stoffzuschneidemaschinen bekannten Abtasteinrichtungen auszustatten, so daß die Abtastung der Zeichnung mehr oder weniger vollautomatisch erfolgen kann.

Der besondere Vorteil des  betrachteten     Zeichengeräts, beim Erstellen einer Zeichnung Zusatzinformationen für vorgegebene Koordinatenpunkte eingeben zu können, kommt dann zum Tragen, wenn das Zeichengerät gemäß Fig. 1 durch einen Plotter ergänzt wird.

Zusätzliche Arbeitserleichterungen ergeben sich bei dem Arbeitsplatz gemäß Fig. 1 ferner dadurch, daß speziell für die Eingabe der Plotterdaten auch die Drucker/ Schreibmaschinen-Anordnung 20 zur Verfügung steht, an der beispielsweise komplette Stücklisten zur Zeichnungsergänzung geschrieben werden können und eine entsprechende Ansteuerung des Plotters 32 ermöglichen.
Insgesamt ergeben sich folgende Einsatzmöglichkeiten:

1. elektronische Anzeige der Koordinaten auf dem Bildschirm des Datenmonitors.

2. Das Arbeiten mit einem elektronischen Lineal (Abstände und Längen sind programmierbar).

3. Zusätzliche maßstabgetreue Anzeige bzw. Umrechnen in andere Maßeinheiten.

4. Überarbeiten vorhandener Zeichnungen (Maßstabsüber- nahme).

5. Arbeiten mit dem Graphics-Tablett (Zeichnungen bzw. Symbole können bis zur vollen Größe der Arbeitsfläche erfasst, digitalisiert und gespeichert werden).

6. Kurvenanalyse.

Da die Bahnführung für den Schreib/Lesestift-Träger 26 je nach Rechnerprogramm auch komplizierte Formen erlaubt, kann dieser manuell längs der freigegebenen Linien, beispielsweise zum Zeichnen von Kreisbahnen, Symbolen, Zeichen und mathematischen Funktionen verwendet werden. Damit entfällt die Notwendigkeit für
die Verwendung von Zirkeln, Schablonen, Kurvenlinealen
usw. Weiterhin können Kurven durch Anfahren der wichtigsten Punkte näherungsweise mit Hilfe des Rechners
berechnet und dann gezeichnet werden. Schließlich kann
das erfindungsgemäße Zeichengerät auch zum Zeichnen
gestrichelter bzw. strichpunktierter Linien eingesetzt
werden, wobei der Schreib/Lesestift-Träger zu diesem
Zweck mit einer steuerbaren Stiftaufsetzmechanik ausgerüstet wird, die über den Rechner ansteuerbar ist,
wodurch beispielsweise auch erreicht werden kann, daß
beim Zeichnen unterbrochene Linien nicht gerade Lücken
derselben auf die Kreuzungspunkte mit anderen Linien
fallen.

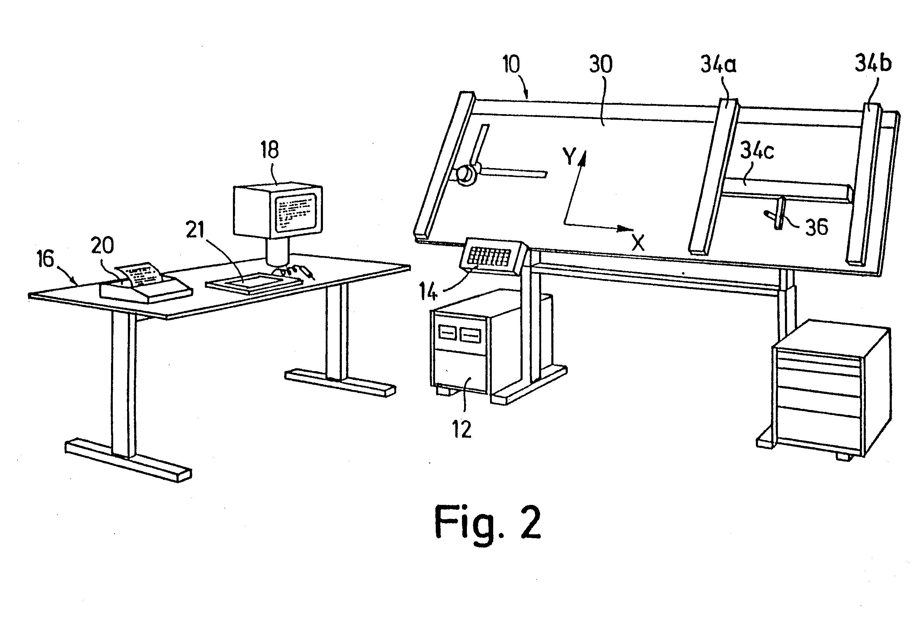

Die in Fig. 2 gezeigte Laufwagen-Zeichenmaschine unterscheidet sich von der vorstehend anhand von Fig. 1 erläuterten Laufwagen-Zeichenmaschine in wesentlichen dadurch, daß die Zeichenmaschine als konventionelle Laufwagen-Zeichenmaschine 10 mit dem üblichen Zeichenkopf
und den daran befestigten Linealen ausgebildet ist,
wobei jedoch das Zeichenbrett in X-Richtung beträchtlich verlängert ist, um Platz für das Aufhängen des
Plotters 32 zu schaffen, dessen Rahmen bei diesem Ausführungsbeispiel zwei Führungsarme 34a, 34b aufweist,
die in Y-Richtung verlaufen und zwischen denen ein in
X-Richtung verlaufender Führungsarm 34c mit der Schreibstifthalterung 36 geführt ist.

Obwohl bei dem Arbeitsplatz gemäß Fig. 2 eine weitgehend konventionelle Zeichenmaschine 10 verwendet wird, ist ähnlich wie bei dem Ausführungsbeispiel gemäß Fig. 1 wieder eine längs der Zeichenmaschine 10 verfahrbare Tastatur 14 vorgesehen, die wieder mit einem zugeordneten Rechner 12 verbunden ist. Der Rechner 12 und die Tastatur 14 dienen bei dieser Ausgestaltung der Steuerung des Plotters 32, der beim normalen Zeichnen aufgrund der Überlänge des Zeichenbretts 30 völlig aus dem Arbeitsbereich der Zeicheneinrichtungen herausgefahren werden kann und mit dem andererseits gegebenenfalls nach Abnahme des Zeichenkopfes und der Lineale vom Zeichenkopfträger 24 durch Verfahren längs der Führungsschiene am Zeichenbrett die gesamte Zeichenfläche erfassbar ist, wobei gegebenenfalls in Ausgestaltung der Erfindung, wie dies auch bei dem Ausführungsbeispiel gemäß Fig.1 möglich ist, deutlich spürbare Raststellungen vorgesehen sein können, die das Positionieren des Plotters in definierten Stellungen bezüglich des Ursprungs für die mit der Zeichenmaschine 10 auszuführenden Zeichenarbeiten erleichtern.

Man erkennt, daß auch bei der einfachen Ausgestaltung der Erfindung gemäß Fig. 2 bereits erhebliche Vorteile gegenüber der bisher üblichen Arbeitsweise erreichbar sind, bei der die Zeichenmaschine einerseits und der Plotter andererseits im allgemeinen völlig getrennte und nicht aufeinander abgestimmte Einrichtungen sind.

POSTADRESSE:
DR E NEUGEBAUER
POSTFACH 260101
D-8000 MÜNCHEN 26

DR. ERICH NEUGEBAUER
PATENTANWALT
EUROPEAN PATENT ATTORNEY
ZUGELASSEN BEIM EUROPÄISCHEN PATENTAMT

0148160

MORASSISTRASSE 2

- 13 -

23. Januar 1985

BZ Plankenhorn KG
80A-4247

Patentansprüche

(Ausscheidungsanmeldung aus 82102608.5)

1. Verfahren zum Anfertigen von Zeichnungen mittels einer rechnergesteuerten Laufwagen-Zeichenmaschine mit einem Zeichenkopf, Positionserfassungseinrichtungen für das Erfassen der jeweiligen Koordinaten des Zeichenkopfes und einem mit den Positionserfassungseinrichtungen verbundenen Rechner mit Speichereinrichtungen und Tastatur, dadurch gekennzeichnet, daß die Daten zu zeichnender Linien oder Symbole über die Tastatur in den Rechner eingegeben oder aus dem Rechner abgerufen werden und der Zeichenkopf mittels den Laufwagen zugeordneten, aufgrund der eingegebenen bzw. abgerufenen Daten gesteuerter Einrichtungen der Servoelektronik nur für Bewegungen längs des Weges der Linien oder Symbole freigegeben wird, die den eingegebenen bzw. abgerufenen Daten entsprechen, und daß die Linien oder Symbole dann durch manuelles Bewegen des Zeichenkopfes längs der durch die Einrichtungen der Servoelektronik gegebenen Führung gezeichnet werden.

TELEFON
(089) 22 43 37 UND

TELEX 5-244 77 pat-d
TELEGRAMMADRESSE (CABLES):

POSTSCHECKKONTO:
POSTSCHECKAMT MÜNCHEN

BANKVERBINDUNG:
BAYER. VEREINSBANK MÜNCHEN

2. Verfahren nach Anspruch 1, dadurch g e k e n n - z e i c h n e t , daß eine Laufwagen-Zeichenmaschine mit elektronischen Gewichts- und Reibungsausgleichseinrichtungen für den Zeichenkopf verwendet wird.

3. Verfahren nach Anspruch 1 oder 2, dadurch g e - k e n n z e i c h n e t , daß der Zeichenkopf gegen einen Schreib/Lesestift-Träger auswechselbar ist.

4. Verfahren nach einem oder mehreren der Ansprüche 1 bis 3, dadurch g e k e n n z e i c h n e t , daß die Zeichnungen oder Teile derselben unter Verwendung der durch die Einrichtungen der Servoelektronik gegebenen Führung, durch freies Zeichnen mit dem Zeichenkopf, durch automatisches Kopieren einer Vorlage und/oder unter Zuhilfenahme eines rechnergesteuerten Plotters angefertigt werden.

5. Rechnergesteuerte Laufwagen-Zeichenmaschine mit einem mittels Laufwagen über eine Zeichenfläche verfahrbaren Zeichenkopf und Positionserfassungseinrichtungen für das Erfassen der jweiligen Koordinaten des Zeichenkopfes sowie mit den Positionserfassungseinrichtungen verbundene Spei- chereinrichtungen und Tastatur aufweisende Rechnereinrich- tungen zum Durchführen des Verfahrens nach einem oder mehreren der Ansprüche 1 bis 4, dadurch g e k e n n - z e i c h n e t , daß der Zeichenkopf mittels den Laufwagen zugeordneten Einrichtungen der Servoelektronik nur für Bewegungen längs des Weges zu zeichnender Linien oder Symbole freigebbar ist.

6.    Zeichenmaschine nach Anspruch 5, dadurch  g e -
k e n n z e i c h n e t ,  daß sie elektronische Gewichts-
und Reibungsausgleichseinrichtungen für den Zeichenkopf
aufweist.

7.    Zeichenmaschine nach Anspruch 5 oder 6, dadurch
g e k e n n z e i c h n e t ,  daß der Zeichenkopf gegen
einen Schreib/Lesestift-Träger auswechselbar ist.

8.    Zeichenmaschine nach einem oder mehreren der Ansprüche 5 bis 7, dadurch  g e k e n n z e i c h n e t ,
daß die Einrichtungen der Servoelektronik mindestens einen
Positionierungsmotor und Einrichtungen zur Wegmessung umfassen.

9.    Zeichenmaschine nach einem oder mehreren der Ansprüche 5 bis 8, dadurch  g e k e n n z e i c h n e t ,
daß außer dem Zeichenkopf eine ebenfalls mittels Laufwagen
über die Zeichenfläche verfahrbare Plottertrageinrichtung
mit einem rechnergesteuerten Plotter vorgesehen ist,
dessen Schreibstift entsprechend den Steuerbefehlen des
Rechners relativ zur Plottertrageinrichtung jeweils in
einem begrenzten Teilbereich der Zeichenfläche der Zeichenmaschine bewegbar ist.

10. Zeichenmaschine nach einem der Ansprüche 5 bis 9, dadurch  g e k e n n z e i c h n e t ,  daß längs der Führung für die Plottertrageinrichtung zum Erleichtern der Positionierung der Plottertrageinrichtung definierte Raststellungen vorgesehen sind.

Fig. 1

0148160

Fig. 2